# EUROPEAN PATENT APPLICATION

(11) **EP 4 696 875 A2**
(43) Date of publication of application: **18.02.2026**
(21) Application number: 25172067.8
(22) Date of filing: 23.04.2025
(51) Int. Cl.: F02D 19/02, F02D 19/06, F02D 41/00, F02D 41/22, F02M 21/02

(54) **SYSTEM AND METHOD FOR DETECTING FUEL LEAKS IN HYDROGEN COMBUSTION ENGINES**

(30) Priority: 30.04.2024 CN 202410537280
(71) Applicant: Cummins, Inc., Columbus, Indiana 47201 (US)
(72) Inventor: XI, Yuejin, Indiana, 47201 (US)
(74) Representative: Cleveland Scott York

(57) **Abstract**

Fuel leak detection is disclosed for a spark-ignited combustion engine that combusts hydrogen fuel. Pressure measurements of the hydrogen fueling system are taken in the crank angle domain of the engine. A hydrogen fuel leak condition is detected in response to a pressure variation that occurs during a crank angle-based injection event that differs from an expected pressure variation.

## Description

### TECHNICAL FIELD

The present application relates to apparatuses, methods, systems, and techniques for fuel leak detection for internal combustion engines that combust hydrogen fuel.

### BACKGROUND

Internal combustion engines may experience fuel leaks during operation, which affects combustion of the air-fuel mixture and may result in fuel collecting in areas of the engine not intended to receive or store fuel. Various attempts have been made to detect and/or diagnose fuel leaks. Existing approaches suffer from a number of disadvantages and shortcomings including unsuitability for detecting and/or responding to fuel leakage. There remains a significant need for the unique apparatuses, methods, systems, and techniques of the present disclosure.

### DISCLOSURE OF EXAMPLE EMBODIMENTS

For the purposes of clearly, concisely, and exactly describing example embodiments of the present disclosure, the manner, and process of making and using the same, and to enable the practice, making and use of the same, reference will now be made to certain example embodiments, including those illustrated in the figures, and specific language will be used to describe the same. It shall nevertheless be understood that no limitation of the scope of the invention is thereby created, and that the invention includes and protects such alterations, modifications, and further applications of the example embodiments as would occur to one skilled in the art.

### SUMMARY

Some embodiments include unique apparatuses for fuel leak detection for hydrogen combustion engines. Some embodiments include unique methods for fuel leak detection for hydrogen combustion engines. Some embodiments include unique systems for fuel leak detection for hydrogen combustion engines. Some embodiments include unique techniques for fuel leak detection for hydrogen combustion engines. Further embodiments, forms, objects, features, advantages, aspects, and benefits shall become apparent from the following description and drawings.

### BRIEF DESCRIPTION OF THE DRAWINGS

FIG. 1 is a schematic diagram illustrating certain aspects of an example prime mover system.
FIG. 2 is a schematic diagram further illustrating certain aspects of an example fueling system for the prime mover system of FIG. 1.
FIG. 3 is a flow diagram illustrating certain aspects of a hydrogen fuel leak detection process.
FIG. 4 includes graphical illustrations showing exemplary pressure measurements of the fueling system and mass flow rates of hydrogen fuel in the crank angle domain of the prime mover.
FIG. 5 is a flow diagram illustrating certain aspects of another fuel leak detection process.

### DETAILED DESCRIPTION OF EXAMPLE EMBODIMENTS

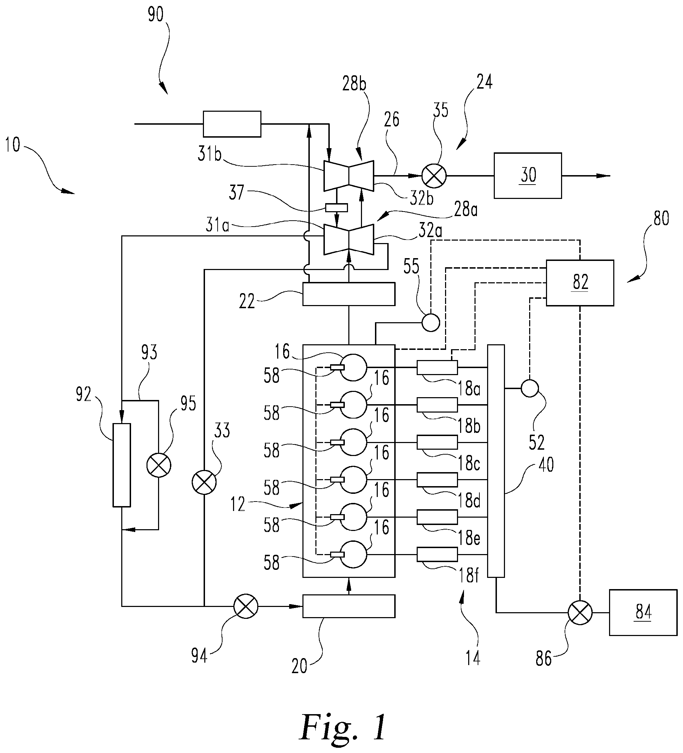

With reference to FIG. 1, there is illustrated an example powertrain system 10 (also referred to herein as system 10) comprising a prime mover 12, such as a spark-ignited combustion engine that combusts hydrogen fuel, and a fueling system 14. Fueling system 14 is adapted and configured to supply gaseous hydrogen to prime mover 12 for combustion in one or more combustion chambers. In some embodiments, fueling system 14 may be additionally adapted and configured to supply one or more other fuels for combustion to prime mover 12 in combination with gaseous hydrogen. For example, prime mover 12 may run solely on hydrogen, on diesel and hydrogen, on natural gas and hydrogen, on propane and hydrogen, etc.

In an embodiment, system 10 includes an electronic control system (ECS) 80 with at least one electronic control unit (ECU) 82 configured to operate prime mover 12 with one or more operating parameters. The ECU 82 monitors fueling system 14 of prime mover 12 for hydrogen fuel leakage during operation of engine 12. In an embodiment, the monitoring does not include monitoring the combustion chambers of prime mover 12. The ECU 82 determines a hydrogen fuel leak condition is present for fueling system 14 in response to a crank-angle associated pressure condition oscillating or varying from an expected pressure variation by more than a threshold amount. In an embodiment, ECU 82 may adjust one or more operating parameters that control operation of prime mover 12 in response to the hydrogen fuel leak condition to reduce hydrogen fuel leakage and or to maintain hydrogen levels around fueling system 14 below flammability limits.

In the illustrated embodiment, prime mover 12 is an internal combustion engine that includes a plurality of cylinders 16 (also referred to as combustion chambers) of a reciprocating piston-in-cylinder type which are configured to generate mechanical power from the combustion of gaseous fuel supplied by fuel injectors 18a, 18b, 18c, 18d, 18e, 18f. Fuel injectors 18a, 18b, 18c, 18d, 18e, 18f are collectively referred to herein as fuel injector or fuel injectors 18, and may be provided in any suitable number based on the number of cylinders 16. Although six cylinders 16 are illustrated in FIG. 1, any number of cylinders 16, each with a fuel injector 18, is contemplated herein. System 10 may be provided in a number of forms including as a prime mover system (or component of a prime mover system) of vehicle, a genset, other power-load system.

Fuel injectors 18 are in fluid communication with respective combustion chambers of cylinders 16 of the prime mover 12 and are structured to inject gaseous fuel. In the illustrated embodiment, fuel injectors 18 are configured and provided as direct fuel injectors configured to inject fuel directly into respective combustion chambers of cylinders 16. Other embodiments contemplate injectors 18 are port injectors that inject fuel directly into ports of intake manifold 20 leading to respective combustion chambers of cylinders 16, or injectors 18 inject fuel into a manifold or other fuel distribution means. Each cylinder 16 may also include a spark plug 58 for spark ignition of the air-fuel mixture in the combustion chambers of cylinders 16. It should be appreciated that engine 12 may include fewer or greater numbers of fuel injectors 18 and cylinders 16 than illustrated that are arranged and configured in a variety of manners. In an embodiment, the fuel injectors 18 and/or spark plugs 58 are controlled to change combustion processes and/or temperature to reduce hydrogen in and/or around an exterior of fueling system 14, as discussed further below.

In the illustrated embodiment, prime mover 12 of system 10 further includes an exhaust manifold 22 connected to receive an output from cylinders 16 and provide the output to exhaust system 24. Exhaust system 24 may include an exhaust conduit 26, at least one turbocharger 28a, 28b, and an aftertreatment system 30 downstream of the at least one turbocharger 28a, 28b. Each turbocharger 28a, 28b may include a compressor 31a, 31b and a turbine 32a, 32b with a wastegate 33 or a variable inlet to control exhaust flow therethrough, such as a variable geometry turbine (VGT). In another embodiment, the at least one turbocharger 28a, 28b is omitted, and/or an exhaust throttle 35 is provided. In an embodiment, the exhaust throttle 35, VGT type turbine 32a, 32b, and/or one or more wastegates 34 is controlled to change the combustion processes, temperature and/or increase air flow to mitigate hydrogen fuel leakage from fueling system 14 of engine 12, as discussed further below.

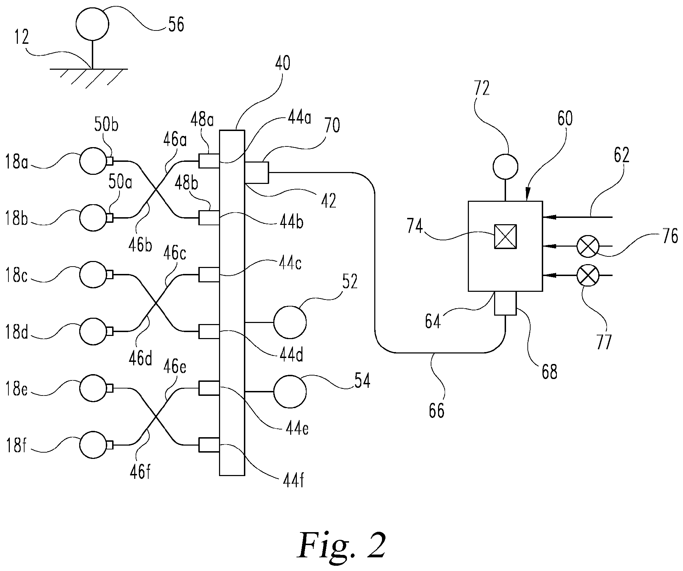

With further reference to FIG. 2, an embodiment of fueling system 14 of prime mover 12 is illustrated. Fueling system 14 includes at least one fuel rail 40 that is connected to fuel injectors 18. Fuel rail 40 may include at least one rail pressure sensor 52 and/or a rail temperature sensor 54. System 10 may also include a hydrogen sensor 56 mounted on prime mover 12 and/or on or near fueling system 14 that is configured to detect the presence of hydrogen fuel outside of fuel rail 40.

Fuel rail 40 includes a rail inlet 42 that receives hydrogen fuel from pressure regulator 60. Pressure regulator 60 can include a regulator inlet 62 that receives fuel from a hydrogen fuel source 84. Pressure regulator 60 also includes a regulator outlet 64 connected to rail inlet 42 with connection tube 66 and end connectors 68, 70. A regulator pressure sensor 72 provides signals indicative of the pressure in pressure regulator 60. Pressure regulator 60 can be controlled by pulse width modulation (PWM) valves 76, 77 in order to maintain a fuel supply in fuel rail 40. Pressure regulator 60 also includes a lock-off valve 74 that prevents fuel flow into pressure regulator 60 when prime mover 12 is shut down.

Fuel rail 40 also includes a plurality of rail outlets 44a, 44b, 44c, 44d, 44e, 44f connected to respective ones of the fuel injectors 18a, 18b, 18c, 18d, 18e, 18f with corresponding ones of the connection tubes 46a, 46b, 46c, 46d, 46e, 46f. For example, connection tube 46a may include a first connector 48a connected to first outlet 44a, and a second connector 50a connected to second fuel injector 18b. Connection tube 46b may similarly include a second connector 48b connected to second outlet 44b, and a second connector 50b connected to first fuel injector 18a. The remaining fuel injectors 18c, 18d, 18e, 18f may be similarly connected to the remaining outlets 44c, 44d, 44e, 44f of fuel rail 40. In an embodiment, the connections of fuel rail 40 with fuel injectors 18 are electrically isolated, insulated, and or shielded.

In another embodiment, prime mover 12 may include multiple common fuel rails 40 dedicated to different portions of the fuel injectors 18. One or more pressure regulators 60 and/or fuel rails 40 are also contemplated, such as may be provided for a prime mover 12 that is an engine with multiple cylinder banks, and/or for a V6 engine, a V8 engine, a V10 engine, a V12 engine, a V16 engine, etc.

Prime mover 12 of system 10 also includes an intake system 90. In an embodiment, each turbocharger 28a, 28b includes a corresponding compressor 31a, 31b in intake system 90 to receive the intake air flow for compression. An intercooler 37 may be provided between compressors 31a, 31b in multi-stage turbocharger embodiments. In an embodiment, intake system 90 may include one or more of a charge air cooler (CAC) 92, an intake throttle 94, and an intake conduit 96 connecting these components to intake manifold 20. CAC 92 may include a CAC bypass 93 and a CAC valve 95 to control the amount of intake air flow through CAC 92. Other embodiments contemplate other intake system components, and/or omission of one or more of the disclosed components. CAC bypass 93, CAC valve 95, and/or intake throttle 94 can be controlled to change the combustion processes, temperature, and/or increase air flow to reduce hydrogen fuel leakage around fueling system 14, as discussed further below.

Still other embodiments contemplate an exhaust gas recirculation (EGR) system 99 to provide exhaust produced from one or more of cylinders 16 to intake system 90. The EGR system may include an EGR cooler, an EGR cooler bypass, and/or an EGR valve to control a temperature and/or amount of EGR flow through the EGR system. EGR flow through the EGR cooler and/or the EGR bypass can be controlled to change the combustion processes, temperature, and/or increase air flow.

In an embodiment, system 10 includes a variable valve timing/actuation (VVT or VVA) system in operable engagement with cylinders 16. As described herein, the VVT/VVA system refers to any mechanism that can change the lift, duration and/or timing of the opening/closing of intake valves and/or exhaust valves of cylinders 16 during operation of the prime mover 12. The VVT/VVA system can be provided as any suitable mechanical device (cam-less or otherwise), electro-hydraulic device, or the like, or a combination thereof. In one embodiment, the VVT system can be controlled to selectively isolate one of more of cylinders 16 from providing a flow output to exhaust system 24.

In some embodiments, fueling system 14 may include additional elements such as a compressor configured to compress gaseous fuel received from fuel source 84 and provide compressed gaseous fuel to one or more rails, and/or an accumulator. Electronically controllable pressure regulator 60 can be configured to control supply of gaseous fuel to and from the accumulator and/or the one or more rails. In any event, fueling system 14 can be controlled to be isolated or shut-off during operation of prime mover 12 so that fuel flow through one or more of the injectors 18 is cut-off, either at valve 86 or at each injector 18, so that reduced or limited hydrogen fuel is injected into the combustion chambers of cylinders 16.

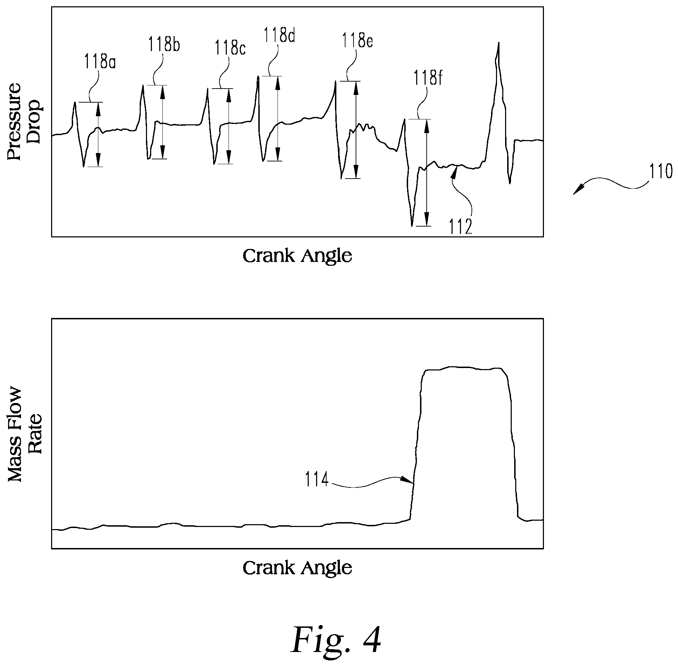

System 10 may further include one or more sensors configured to sense or detect one or more characteristics associated with operation of system 10, prime mover 12, and/or fueling system 14. The sensors may include any suitable devices to monitor operating parameters and functions of the system 10. For example, the sensors may include one or more pressure sensors 52 in communication with one or more components of fueling system 14 and one or more engine sensors such as crank angle sensor 55 to determine crank angle position of prime mover 12. In an embodiment, crank angle sensor 55 detects and provides an output indicative of a crank angle position of a crankshaft of prime mover 12. In an embodiment, pressure sensor 52 of fuel rail 40 provides output for pressure in fuel rail 40. As shown in FIG. 4, the pressure sensors outputs are correlated with the crank angle outputs, which can be used to determine a hydrogen fuel leak condition associated with fueling system 14. The fuel rail pressure sensor 52 may be a high data rate (HDR) sensor capable of determining the fuel rail pressure with an HDR measurement in the crank angle domain of prime mover 12.

System 10 further includes ECS 80 in communication with prime mover 12 and configured to control one or more aspects of prime mover 12, including controlling the injection of fuel into prime mover 12 via the fuel injectors 18 and sparking timing with spark plugs 58. Accordingly, ECS 80 may be in communication with the fuel injectors 18 and configured to command each fuel injector 18 on and off at prescribed times to inject fuel into the prime mover 12 as desired for ignition with spark plugs 58 at a desire ignition timing. ECS 80 includes at least one ECU 82 configured to execute operations of ECS 80 as described further herein and, in some embodiment, may include additional ECUs configured to execute operations of ECS 80 as described further herein.

ECS 80 may be further structured to control other operating parameters of prime mover 12, which may include aspects of prime mover 12 that may be controlled with an actuator activated by ECS 80. For example, ECS 80 may be in communication with actuators and sensors for receiving and processing sensor input and transmitting actuator output signals. Actuators that control operating parameters of prime mover 12 may include, but are not limited to, fuel injectors 18, spark plugs 58, a VVT/VVA system, intake throttle 94, exhaust throttle 35, VGT turbine 32a, 32b or wastegate 33, CAC valve 95 and CAC bypass 93, an EGR valve, and/or a speed of prime mover 12.

In at least one embodiment, system 10 may include one or more sensors in communication with the ECS 80 and structured to determine characteristics of prime mover 12 and fueling system 14 and detect a hydrogen fuel leak condition in response to the characteristics. In at least one embodiment of system 10, one or more sensors 52, 54, 55, 56 in communication with the ECS 80 represents a virtual sensor that determines a value based on an algorithm for predicting or determining the value based on one or more other sensor inputs and/or operating conditions.

As will be appreciated by the description that follows, the techniques described herein relating to fuel leak detection and/or control of operating parameters of prime mover 12 can be implemented in ECS 80, which may include one or more controllers for controlling different aspects of the system 10. In one form, the ECS 80 comprises one or more ECU's 82 such as an engine control unit or engine control module. The ECS 80 may be comprised of digital circuitry, analog circuitry, or a hybrid combination of both of these types. Also, the ECS 80 may be programmable, an integrated state machine, or a hybrid combination thereof. The ECS 80 may include one or more Arithmetic Logic Units (ALUs), Central Processing Units (CPUs), memories, limiters, conditioners, filters, format converters, or the like which are not shown to preserve clarity. In one form, the ECS 80 is of a programmable variety that executes algorithms and processes data in accordance with operating logic that is defined by programming instructions (such as software or firmware). Alternatively or additionally, operating logic for the ECS 80 may be at least partially defined by hardwired logic or other hardware.

In addition to the types of sensors described herein, any other suitable sensors and their associated parameters may be encompassed by the system and methods. Accordingly, the sensors may include any suitable device used to sense any relevant physical parameters including electrical, mechanical, and chemical parameters of system 10. As used herein, the term sensors may include any suitable hardware and/or software used to sense or estimate any engine system parameter and/or various combinations of such parameters either directly or indirectly.

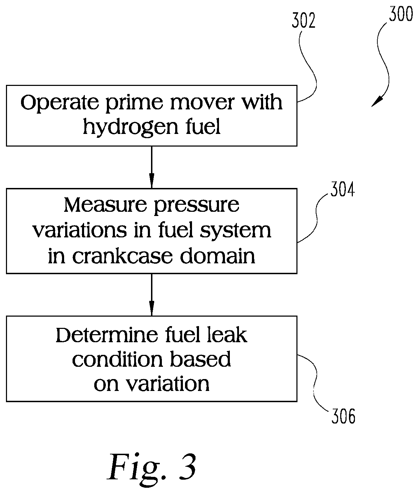

With reference to FIG. 3, there is illustrated a flow diagram of a process 300 for detecting and/or reacting to a fuel leak in fueling system 14 of prime mover 12 with an electronic control system (*e.g.*, ECS 80 or another electronic control system), in operative communication with a fueling system (*e.g.*, fueling system 14 or another fueling system). Process 300 may be implemented in and performed by one or more components of an electronic control system such as one or more electronic control units (*e.g.*, ECU 82 and/or other electronic control units) and/or by other electronic control system components.

Process 300 begins at operation 302, which operates prime mover 12 using combustion of hydrogen fuel from fueling system 14. In an embodiment, prime mover 12 is a spark-ignited combustion engine and fueling system 14 includes fuel rail 40 connected to the plurality of fuel injectors 18.

Process 300 continues at operation 304 to measure pressure variation of the fueling system 14 in the crank angle domain during operation of the spark-ignited combustion engine. By using a HDR pressure sensor 52, pressure readings of fuel rail 40 can be correlated to the crank angle domain of prime mover 12.

Process 300 then continues at operation 306 to determine a hydrogen fuel leak condition of the fueling system 14 in response to the pressure variation that occurs during a crank angle-based fuel injection event. For example, fuel rail 40 may include a stable fuel pressure that varies slightly during stall conditions. A normal or nominal pressure drop can be expected at the start of injection that causes a nominal or expected pressure variation or pressure differential that can lie anywhere within a range of nominal or expected differential pressures. If the measured pressure variation or pressure differential is greater than any pressure differential within the range of expected pressure differentials, an anomaly is indicated that is associated with a hydrogen fuel leak condition.

In an embodiment, process 300 includes adjusting the operation of the spark-ignited combustion engine in response to the hydrogen fuel leak condition. For example, hydrogen fuel flow can be reduced or cutoff to the one or more fuel injectors 18 identified as leaking to maintain a hydrogen amount present around an exterior of the hydrogen fueling system 14 below a flammability limit until repairs can be made. The amount of hydrogen present can be monitored by hydrogen sensor 56.

In an embodiment, once the leakage condition is determined, one or more further actions can be taken. For example, a warning light can be illuminated and/or a fault code can be generated by ECU 82. In an embodiment, the hydrogen amount around the exterior of fueling system 14 can be continually monitored by hydrogen sensor 56. Other embodiments contemplate controlling one or more actuators of system 10 to reduce a demand for hydrogen fuel to control and reduce the hydrogen fuel leakage, such as actuators that control fuel injectors 18, spark plugs 58, a VVT/VVA system, intake throttle 94, exhaust throttle 35, VGT turbine 32a, 32b or wastegate 33, CAC valve 95 and CAC bypass 93, an EGR valve, and/or a speed of prime mover 12.

The pressure variation during operation of prime mover 12 can be measured in the crank angle domain using pressure sensor 52 that is a high data rate pressure sensor connected to fuel rail 40. In an embodiment, the pressure variation measured during process 300 includes a pressure oscillation or variation for each fuel injector during start of injection for each crank angle-based fuel injection event for the plurality of fuel injectors 18. A hydrogen fuel leak condition can be determined based on a pressure variation during a fuel injection event that is larger than the pressure variation that is expected and/or that occurs for the other fuel injection events due to a larger pressure drop for the leaking fuel injector 18. The pressure variation may also correspond to an increased mass flow rate of hydrogen fuel to the leaking fuel injector 18 during the crank angle-based fuel injection event, providing another indicator a fuel leakage condition for the fuel injector.

In an embodiment, process 300 includes regulating a flow of the hydrogen fuel to the fuel rail through pressure regulator 60. The leak condition can be indicative of a hydrogen fuel leak of the fuel rail 40; of regulator 60; of at least one connection tube 46a, 46b, 46c, 46d, 46e, 46f and/or of connector 48a, 50a, 48b, 50b of the fuel injectors 18 with the fuel rail 40; and/or of at least one connection tube 66 or connection 68, 70 of the fuel rail 40 with pressure regulator 60.

With reference to FIG. 4, there is illustrated an example hypothetical chart 110 showing pressure measurements 112 from an HDR pressure sensor 52 in the crank angle domain of prime mover 12. During injection of fuel by fuel injectors 18, a pressure variation is created in fuel rail 40 as indicated by the pressure variations 118a, 118b, 118c, 118d, 118e, 118f for each of the fuel injection events of the corresponding fuel injectors 18a, 18b, 18c, 18d, 18e, 18f.

As can be observed, the pressure variation 118f, for fuel injector 18f during its associated crank angle domain is significantly greater than the other fuel injectors 18 due to a greater pressure drop in fuel rail 40 during the fuel injection event. An increase in the mass flow rate 114 of the hydrogen fuel is also shown that correlates with the pressure variation 118f. The measured pressure variation 118f can be compared with a threshold or expected pressure variation to determine if a hydrogen fuel leakage condition is present. The threshold or expected pressure variation can be determined by experimentation, past operating experience, learned normal or nominal conditions, expected pressure drops, and/or comparisons with other fuel injection events.

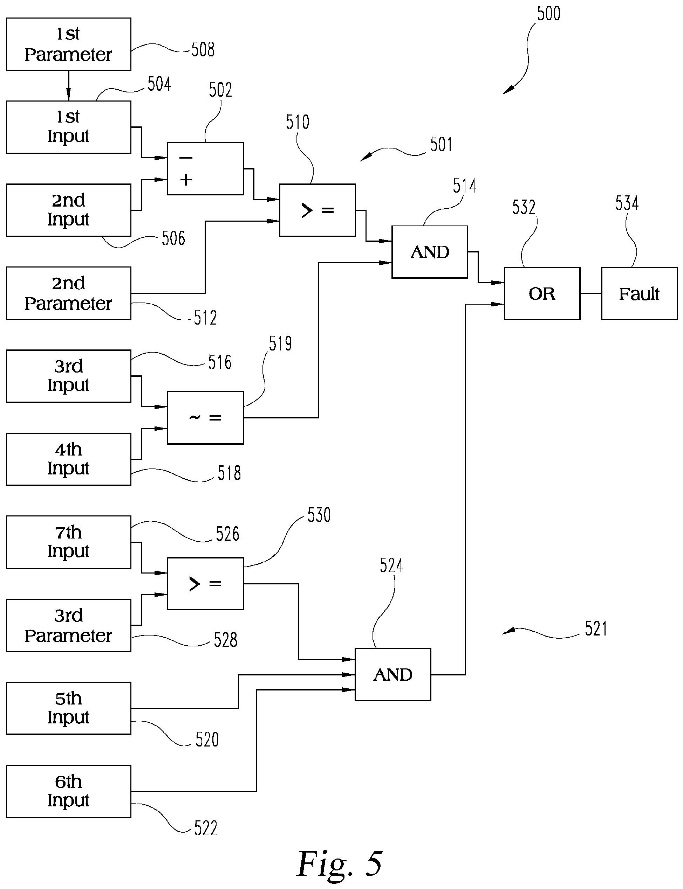

Referring to FIG. 5, an embodiment of a process 500 for detecting a hydrogen fuel leak condition is shown. Process 500 includes a first path 501 for when the prime mover is operating. First path 501 includes a summation block 502 that sums first input 504 of average rail pressure for fuel rail 40, and a second input 506 of the HDR rail pressure measured by pressure sensor 52. A first tunable input parameter 508 includes a tunable reference crank angle window 508 for the determination of the average rail pressure of the first input 504.

Process 500 includes a conditional block 510 that compares the output from summation block 502 to a second tunable input parameter 512 that includes a pressure variation threshold map. If condition is evaluated as TRUE, the output from conditional block 510 is provided to AND operator 514. Third input 516 of crank angle and fourth input 518 of start of injection are also evaluated and provided to AND operator 514 from conditional block 519.

Process 500 includes a second path 521 when prime mover 12 is stalled or stopped. The second path 521 includes fifth input 520 of engine speed stopped condition and a sixth input 522 of fuel valve open position that, if evaluated as TRUE, are supplied to AND operator 524. The second path 521 also includes a seventh input 526 of the fuel rail pressure change rate and a tunable input parameter 528 of a delta pressure threshold for the fuel pressure change rate indicative of a hydrogen fuel leak condition that are provided to conditional block 530. If the condition in conditional block 530 is evaluated as TRUE, the output is provided to AND operator 524.

The values of AND operators 514, 524 are evaluated at OR operation 532. If either of the values indicate a hydrogen fuel leak condition is present, process 500 continues at operation 534 to indicate a fuel leak fault condition is active and/or to shut off hydrogen fuel flow to common rail 40.

Using the processes and systems disclosed herein, a fuel leak condition can be detected more rapidly than processes and systems that only employ external sensors, such as hydrogen sensor 56, to detect the presence of hydrogen exterior to fueling system 14 and/or prime mover 12. The high data rate, crank angle-based pressure data collection allows the fuel system connections of fueling system 14 to be monitored and hydrogen fuel leakage conditions to be indicated and controlled before the hydrogen amount accumulates to exceed flammability limits.

As shown by this detailed description, the present disclosure contemplates multiple and various embodiments, including, without limitation, the following example embodiments. In an embodiment, a method of operating a spark-ignited combustion engine that combusts hydrogen is provided. The method includes detecting leakage of hydrogen fuel by operating a spark-ignited combustion engine the engine with hydrogen fuel provided by a hydrogen fueling system, the hydrogen fueling system including a fuel rail connected to a plurality of fuel injectors; measuring pressure variation of the hydrogen fueling system in a crank angle domain during operation of the spark-ignited combustion engine; and determining a hydrogen fuel leak condition of the hydrogen fueling system in response to the pressure variation that occurs during a crank angle-based fuel injection event.

In an embodiment, the method includes adjusting the operation of the spark-ignited combustion engine in response to the hydrogen fuel leak condition to maintain a hydrogen amount present around an exterior of the hydrogen fueling system below a flammability limit.

In an embodiment, the pressure variation that indicates the hydrogen fuel leak condition is a pressure drop during a crank angle-based fuel injection event for at least one of the plurality of fuel injectors. In a further embodiment, the pressure drop is greater than one or more other pressure drops for other crank angle-based fuel injection events for one or more other of the plurality of fuel injectors.

In an embodiment, the pressure variation that indicates the hydrogen fuel leak condition further corresponds to an increased mass flow rate of hydrogen fuel during the crank angle-based fuel injection event.

In an embodiment, the method includes regulating a flow of the hydrogen fuel to the fuel rail through a pressure regulator. In an embodiment, the method includes measuring a pressure of the fuel rail with a high data rate pressure sensor.

In an embodiment, the hydrogen fuel leak condition is indicative of a hydrogen fuel leak of the fuel rail, at least one connection of the fuel injectors with the fuel rail, and/or at least one connection of the fuel rail with a pressure regulator.

According to another aspect of the disclosure, a system for detecting leakage of hydrogen fuel is provided. The system includes a spark-ignited combustion engine including at least one fuel rail and a plurality of fuel injectors connected to the at least one fuel rail. The spark-ignited combustion engine further includes an electronic control unit (ECU) configured to perform operations to: operate the spark-ignited combustion engine with hydrogen fuel from a hydrogen fuel source; measure pressure variation of the hydrogen fuel in the crank angle domain during operation of the spark-ignited combustion engine; and determine a hydrogen fuel leak condition of the hydrogen fuel in response to the pressure variation of a crank angle-based fuel injection event differing from an expected pressure variation.

In an embodiment, the spark-ignited combustion engine includes a pressure regulator connecting a fuel source to the fuel rail. The pressure regulator is connected to the ECU, and the ECU is configured to perform operations to regulate a flow of the hydrogen fuel from the hydrogen fuel source to the fuel rail through the pressure regulator. In a further embodiment, a pressure sensor is connected to the pressure regulator.

In a further embodiment, the spark-ignited combustion engine includes a plurality of injector tubes connecting the plurality of injectors to respective ones of a plurality of rail outlets of the fuel rail, and a connection tube connecting a regulator outlet of the pressure regulator to a rail inlet of the fuel rail.

In a further embodiment, the spark-ignited combustion engine includes a plurality of end connectors connecting the plurality of injector tubes to respective ones of the plurality of fuel injectors and the plurality of rail outlets.

In an embodiment, the spark-ignited combustion engine includes a high data rate pressure sensor connected to the common rail and the ECU. In an embodiment, the ECU is configured to determine the pressure variation that indicates the hydrogen fuel leak condition based on a pressure drop that occurs during a crank angle-based fuel injection event for one of the plurality of fuel of injectors.

In a further embodiment, the pressure drop is greater than one or more other pressure drops for other crank angle-based fuel injection events for one or more other of the plurality of fuel injectors. In a further embodiment, the pressure variation that indicated a hydrogen fuel leak condition further corresponds to an increased mass flow rate of hydrogen fuel during the crank angle-based fuel injection event.

According to another aspect of the disclosure, an apparatus for detecting leakage of hydrogen fuel during operation of a spark-ignited combustion engine is provided. The apparatus includes a non-transitory memory medium configured to store instructions executable by a processor to perform the acts of: operate the spark-ignited combustion engine with hydrogen fuel from a hydrogen fuel source; measure pressure variation of the hydrogen fuel in the crank angle domain as it is being provided to the spark-ignited combustion engine; and determine a hydrogen fuel leak condition of the hydrogen fuel in response to a differential in the pressure variation of a crank angle-based fuel injection event from an expected differential in the pressure variation.

In an embodiment, the non-transitory memory medium stores instructions executable by the processor to perform the acts of: measure the pressure variation in the fuel rail with a high data rate pressure sensor.

In an embodiment, the non-transitory memory medium stores instructions executable by the processor to perform the acts of: determine the differential in the pressure variation as a pressure drop during the crank angle-based fuel injection event for one of the plurality of fuel of injectors, the pressure drop being greater than one or more other pressure drops for other crank angle based fuel injection events for one or more other of the plurality of fuel injectors.

It shall be appreciated that terms such as "a non-transitory memory," "a non-transitory memory medium," and "a non-transitory memory device" refer to a number of types of devices and storage mediums which may be configured to store information, such as data or instructions, readable or executable by a processor or other components of a computer system and that such terms include and encompass a single or unitary device or medium storing such information, multiple devices or media across or among which respective portions of such information are stored, and multiple devices or media across or among which multiple copies of such information are stored.

It shall be appreciated that terms such as "determine," "determined," "determining" and the like when utilized in connection with a control method or process, an electronic control system or controller, electronic controls, or components or operations of the foregoing refer inclusively to a number of acts, configurations, devices, operations, and techniques including, without limitation, calculation or computation of a parameter or value, obtaining a parameter or value from a lookup table or using a lookup operation, receiving parameters or values from a datalink or network communication, receiving an electronic signal (*e.g.*, a voltage, frequency, current, or pulse-width modulation (PWM) signal) indicative of the parameter or value, receiving output of a sensor indicative of the parameter or value, receiving other outputs or inputs indicative of the parameter or value, reading the parameter or value from a memory location on a computer-readable medium, receiving the parameter or value as a run-time parameter, and/or by receiving a parameter or value by which the interpreted parameter can be calculated, and/or by referencing a default value that is interpreted to be the parameter value.

While example embodiments of the disclosure have been illustrated and described in detail in the drawings and foregoing description, the same is to be considered as illustrative and not restrictive in character, it being understood that only certain example embodiments have been shown and described and that all changes and modifications that come within the spirit of the claimed inventions are desired to be protected. It should be understood that while the use of words such as preferable, preferably, preferred or more preferred utilized in the description above indicates that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. A method of detecting leakage of hydrogen fuel, the method comprising:
operating a spark-ignited combustion engine the engine with hydrogen fuel provided by a hydrogen fueling system, the hydrogen fueling system including a fuel rail connected to a plurality of fuel injectors;
measuring pressure variation of the hydrogen fueling system in a crank angle domain during operation of the spark-ignited combustion engine; and
determining a hydrogen fuel leak condition of the hydrogen fueling system in response to the pressure variation that occurs during a crank angle-based fuel injection event.

2. The method of claim 1, further comprising adjusting the operation of the spark-ignited combustion engine in response to the hydrogen fuel leak condition to maintain a hydrogen amount present around an exterior of the hydrogen fueling system below a flammability limit, and/or
(a) wherein the pressure variation is a pressure drop during a crank angle-based fuel injection event for at least one of the plurality of fuel injectors, and/or
(b) further comprising regulating a flow of the hydrogen fuel to the fuel rail through a pressure regulator.

3. The method of claim 1, wherein the hydrogen fuel leak condition is indicative of a hydrogen fuel leak of:
the fuel rail;
at least one connection of the fuel injectors with the fuel rail; and/or
at least one connection of the fuel rail with a pressure regulator.

4. A system for detecting leakage of hydrogen fuel, the system comprising:
a spark-ignited combustion engine including at least one fuel rail and a plurality of fuel injectors connected to the at least one fuel rail, the spark-ignited combustion engine further including an electronic control unit (ECU) configured to perform operations to:
operate the spark-ignited combustion engine with hydrogen fuel from a hydrogen fuel source;
measure pressure variation of the hydrogen fuel in the crank angle domain during operation of the spark-ignited combustion engine; and
determine a hydrogen fuel leak condition of the hydrogen fuel in response to the pressure variation of a crank angle-based fuel injection event differing from an expected pressure variation sufficiently to indicate the hydrogen fuel leak condition.

5. The system of claim 4, wherein the spark-ignited combustion engine includes a pressure regulator connecting a fuel source to the fuel rail, the pressure regulator further connected to the ECU, and the ECU is configured to perform operations to regulate a flow of the hydrogen fuel from the hydrogen fuel source to the fuel rail through the pressure regulator.

6. The system of claim 5, wherein the spark-ignited combustion engine further comprises:
a plurality of injector tubes connecting the plurality of injectors to respective ones of a plurality of rail outlets of the fuel rail; and
a connection tube connecting a regulator outlet of the pressure regulator to a rail inlet of the fuel rail.

7. The system of claim 6, wherein the spark-ignited combustion engine includes a plurality of end connectors connecting the plurality of injector tubes to respective ones of the plurality of fuel injectors and the plurality of rail outlets.

8. The system of claim 5, further comprising a pressure sensor connected to the pressure regulator.

9. The system of claim 4, wherein the spark-ignited combustion engine includes a high data rate pressure sensor connected to the common rail and the ECU.

10. The system of claim 4, wherein the ECU is configured to determine the pressure variation that indicates the hydrogen fuel leak condition based on a pressure drop during a crank angle-based fuel injection event for one of the plurality of fuel of injectors.

11. The method of claim 3 or system of claim 10, wherein the pressure drop that indicates the hydrogen fuel leak condition is greater than one or more other pressure drops for other crank angle-based fuel injection events for one or more other of the plurality of fuel injectors.

12. The method of claim 3 or the system of claim 10, wherein the pressure variation that indicates the hydrogen fuel leak condition further corresponds to an increased mass flow rate of hydrogen fuel during the crank angle-based fuel injection event.

13. An apparatus for detecting leakage of hydrogen fuel during operation of a spark-ignited combustion engine, the apparatus comprising:
a non-transitory memory medium configured to store instructions executable by a processor to perform the acts of:
operate the spark-ignited combustion engine with hydrogen fuel from a hydrogen fuel source;
measure pressure variation of the hydrogen fuel in the crank angle domain as it is being provided to the spark-ignited combustion engine; and
determine a hydrogen fuel leak condition of the hydrogen fuel in response to a differential in the pressure variation of a crank angle-based fuel injection event from an expected differential in the pressure variation.

14. The method of claim 1 or the apparatus of claim 13, wherein the non-transitory memory medium stores instructions executable by the processor to perform the acts of:
measure the pressure variation in the fuel rail with a high data rate pressure sensor.

15. The apparatus of claim 13, wherein the non-transitory memory medium stores instructions executable by the processor to perform the acts of:
determine the differential in the pressure variation as a pressure drop during the crank angle-based fuel injection event for one of the plurality of fuel of injectors, the pressure drop being greater than one or more other pressure drops for other crank angle based fuel injection events for one or more other of the plurality of fuel injectors.
